# EUROPÄISCHE PATENTSCHRIFT

(11) **EP 0 521 817 B1**
(45) Veröffentlichungstag und Bekanntmachung des Hinweises auf die Patenterteilung: **01.05.1996**
(21) Anmeldenummer: 92810370.4
(22) Anmeldetag: 15.05.1992
(51) Int. Cl.: A01C 1/04, A01G 1/00

(54) **Einrichtung zur Herstellung einer Substratschicht für den Pflanzenanbau**
Device for producing a substrate layer for plant culture
Dispositif pour l'élaboration d'une couche de substrat pour la culture de plantes

(30) Priorität: 17.05.1991 CH 1477/91
(43) Veröffentlichungstag der Anmeldung: 07.01.1993
(73) Patentinhaber: Eschbach, Andreas, CH-4414 Füllinsdorf (CH)
(72) Erfinder: Eschbach, Andreas, CH-4414 Füllinsdorf (CH)
(74) Vertreter: Legland, Brynjulv

(56) Entgegenhaltungen:
- US-A- 3 903 816
- US-A- 3 980 029
- US-A- 4 175 496
- US-A- 4 720 935
- US-A- 4 941 282

## Beschreibung

Die Erfindung betrifft eine Einrichtung gemäss dem Oberbegriff des ersten Patentanspruches.

Eine Einrichtung dieser Art ist z.B. in US-A-3 903 816 beschrieben, die aber gegenüber der vorliegenden Anmeldung die folgenden Nachteile aufweist:
a) nur eine Fahrtrichtung ist vorgesehen,
b) sie ist aufwändig und mit einem vertikalen Förderer und einem horizontalen Förderband ausgestattet,
c) die Saatvorrichtung ist schwer zugänglich,
d) das Saatgut kann nur kontinuierlich und nicht in gleichmässigen Abständen in die Erdschicht ausgelegt werden,
e) die Konstruktion ist kompliziert und schwer zugänglich, die Wartung und die Bedienung sind aufwändig, und
f) sie berücksichtigt nicht Probleme, die mit dem Recycling verbunden sind.

Weitere Einrichtungen dieser Art sind z.B. in US-A 3-980 029, 4 175 496 und 4 941 282 beschrieben, die alle zur Herstellung von Grasmatten für Sportplätze, Parkanlagen usw. ausgelegt sind.

Diese Einrichtungen sind teilweise nicht mit eigenem Antrieb ausgerüstet und benötigen einen Traktor für die Fortbewegung, so dass sie nicht in einer geschlossenen Halle, wie in einem Treibhaus, verwendbar sind. Mit dem Verkauf der hergestellten Matte ist das Problem mit dem Recycling für den Hersteller abgeschlossen.

Beim Gemüsebau ist das Problem anders als bei der Herstellung von Grasmatten gelagert, weil der Produzent darauf angewiesen ist, möglichst wenig Abfall zu produzieren, den er zu möglichst geringen Kosten loswerden muss. Deshalb ist das Recycling im Gemüsebau im Gegensatz zur Grasmatten-Herstellung ausserordentlich wichtig.

Aufgabe der Erfindung ist somit die Schaffung einer Einrichtung mit Substrat zur Herstellung einer Schicht für den Pflanzenanbau, welche nicht die Nachteile der bisherigen Ausführungen aufweist.

Mit Pflanzenanbau ist vor allem der Anbau von Gemüse, Salat und Früchten, jedoch in geringerem Masse auch die Herstellung von Grasmatten gemeint.

Die zu schaffende Einrichtung soll einen eingebauten Antrieb aufweisen, und leicht manövrierbar sein. Ferner soll das verwendete Substrat mit allen Zusätzen und Folie biologisch leicht abbaubar sein.

Mit dieser Abbaubarkeit ist gemeint, dass das verwendete Substrat, z.B. mit den Wurzeln von Salat, Tomaten oder Gurken auf einen Komposthaufen gelegt werden kann, wo es innert kurzer Zeit zu Kompost verwandelt wird, der allein oder zusammen mit einem angelieferten Substrat für eine neue Bepflanzung verwendbar ist.

Diese Aufgabe ist erfindungsgemäss durch die Merkmale im Kennzeichnungsteil des ersten Anspruches gelöst.

Ausführungsformen sind in den abhängigen Ansprüchen umschrieben.

Die Einrichtung ist mit einem eigenen Antrieb versehen und in einem Treibhaus problemlos einsetzbar, da er wenig Platz beansprucht und in der Regel durch Netzanschluss oder von einer Batterie elektrisch angetrieben wird.

Die Einrichtung ermöglicht eine schnelle und genaue Herstellung einer Substratschicht für den Anbau von Salaten usw.. Die Schichtdicke ist je nach der vorgesehenen Pflanzenart einstellbar.

Die Substratart sichert somit ein optimal gleichmässiges Wachsen und Ernten der Pflanzen über die gesamte, bepflanzte Fläche. Auf diese Weise wird die gesamte Fläche auf einen Schlag für die nächste Bepflanzung freigestellt.

Es ist ferner wichtig zu beachten, dass das für eine bestimmte Pflanzenart verwendete Substrat bei Wiederverwendung für andere Pflanzenarten eingesetzt wird.

Nachfolgend wird der Gegenstand der Erfindung anhand einer Zeichnung näher erläutert, welche eine Seitenansicht der Einrichtung zeigt.

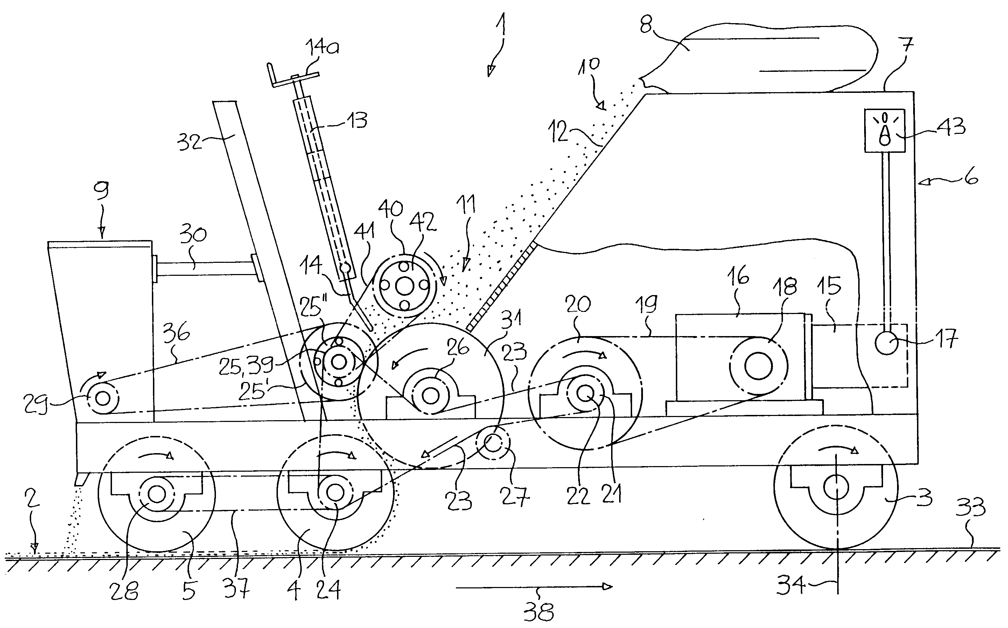

In der Zeichnung ist eine Einrichtung 1 zur Herstellung einer Substratschicht 2 für Pflanzen dargestellt. Die Einrichtung 1 wird von einer Laufwalze 3, einer mittleren 4 und einer hinteren Antriebswalze 5 getragen. Am vorderen Ende befindet sich ein Gehäuse 6 mit einem Tisch 7 zur Aufnahme des in einem Sack 8 verpackten Substrats 10. Vorrätige Säcke 8 können im Gehäuse 6 mitgeführt werden.

Am hinteren Ende der Einrichtung 1 befindet sich ein Behälter 9 zur Aufnahme und begabe von Saatgut. Das Substrat 10 wird aus dem in der ganzen Längsrichtung aufgeschnittenen Sack 8 über die gesamte Breite der Einrichtung 1 ausgeschüttet und fällt in den sich nach unten zuspitzenden Abgaberaum 11, der zuunterst in einem Spalt zwischen einer Schrägfläche 12 und und einem Leitblech 14 endet. Zur Einstellung der Dicke der Substratschicht 2 ist der Abstand vom Leitblech 14 zu einer Förderwalze 31 massgebend. Das Leitblech 14 ist mit einemSpindelantrieb 13 ausgestattet und mittels einer Kurbel 14a in der Höhe verstellbar.

In oder neben dem Gehäuse 6 befindet sich ein Elektromotor 15 mit einem angeschraubten Getriebe 16.Der Antrieb des Motors 15 erfolgt über direkten Anschluss 17 an das Stromnetz oder nicht dargestellte Akkumulatoren, die periodisch über diesen Anschluss 17 aufgeladen werden. Zwischen dem Netz und dem Motor 15 befindet sich ein Schalter 43 mit einer Ausschaltposition und je einer Stellung für die Vor- und die Rückwärtsbewegung der Einrichtung 1.

Falls keine Batterien verwendet werden, kann das Stromkabel an einer nicht gezeigten Stromschiene angeschlossen oder automatisch von einer entfernten Steckdose auf- und abwickelbar sein.

Die Verwendung von Batterien kann deshalb zweckmässig sein, weil die Geschwindigkeit der Einrichtung und somit der Leistungsbedarf relativ niedrig ist.

Das Getriebe 16 ist mit einer ersten Riemenscheibe 18 versehen, die über einen ersten Riemen 19 eine zweite Riemenscheibe 20 antreibt, die mit einem ersten Zahnrad 21 auf einer gemeinsamen Welle 22 verbunden ist. Über das Zahnrad 21 läuft eine Kette 23 über drei weitere Zahnräder 24, 25 und 26, sowie ein umstellbares Umlenkzahnrad 27. Die Riemen können entweder Flach- oder Zahnriemen sein. Von diesen drei Zahnrädern 24, 25 und 26, treibt das erste 24 über eine Kette 37 und ein sechstes Zahnrad 28 die hintere Antriebswalze 5 zum Vorschub der Einrichtung 1 an. Das Zahnrad 25 treibt eine Förderschnecke 25" für das Substrat 10 an, so dass es möglichst gleichmässig verteilt wird. Eine Möglichkeit zur Einstellung der Dicke der Substratschicht 2 besteht darin, die Drehzahl der Förderschnecke 25" oder insbesondere 42 im Verhältnis zur Vorwärtsgeschwindigkeit der Einrichtung 1 zu verlangsamen oder zu beschleunigen.

Das zweite 25 der drei Zahnräder 24, 25 und 26 treibt über ein Zahnrad 25′ ein siebtes Zahnrad 29 und eine Kette 36 die Ausgabevorrichtung des Saatgut-Behälters 9, und das dritte 26 eine Förderwalze 31 für das Substrat 10 an. Das Substrat 10 wird somit von der Förderschnecke 42 und der Förderwalze 31 mitgenommen und dann zwischen ihr und der Walze 4 zu einer dünneren Schicht 2 zusammengedrückt, die auf den Boden zu liegen kommt und dort nochmals von den beiden Antriebswalzen 4 und 5 zusammengepresst wird.

Hinter der Antriebswalze 5 fällt das Saatgut vom Behälter 9 auf den Boden und zwar in einer auf die Fortbewegungsgeschwindigkeit und die Art des Saatgutes abgestimmten Menge pro Flächeneinheit. Durch Hebung und Senkung des Leitbleches 14 wird die Dicke der Substratschicht 2 eingestellt. Zur Verteilung des Substrates 10 und des Saatgutes in der Breitenrichtung sind verschiedene Massnahmen möglich, auf die hier nicht näher eingegangen wird.

Der Saatgut-Behälter oder die Vorrichtung 9 ist über einen Träger 30 an einer Tragplatte 32 befestigt.

Eine Lenkung für die Einrichtung kann z.B. darin bestehen, dass die vordere Walze 3 um eine vertikale Achse 34 drehbar ist. Die Lenkung wird vorwiegend beim Kehren der Einrichtung 1, jedoch in Ausnahmefällen zur Kurskorrektur unterwegs benutzt. Ferner kann ein Hebezeug derjenigen Art benutzt werden, welche zur Bewegung von Autos in einer Reparaturgarage benutzt wird. Diese kann an der Einrichtung 1 vorne oder hinten fest angeordnet sein oder bei einer Kehrtwendung angesetzt werden. Mit diesem Hebezeug und einer der Walzen 3 oder 5 ist es möglich, die Einrichtung 1 zu bewegen. Wenn eine derartige Kehrtwendung stattfindet, wird die Saatabgabe, z.B. mittels eines nicht gezeigten Schiebers geschlossen.

Vorangehend wurde von einem Antrieb mittels eines Elektromotors ausgegangen. Dabei kann es zweckmässig sein, für dessen Antrieb Solarkollektoren zu verwenden, weil in der Nähe eines Treibhauses normalerweise viel Platz zur Aufstellung von Sonnenkollektoren zur Verfügung steht. In der Weise kann man praktisch vollständig auf den Anschluss an das öffentliche Kraftnetz verzichten.

Statt des Elektromotors ist es möglich, einen Benzinmotor zu verwenden, wobei es aber hier wichtig ist, eine Lösung für die begase zu finden, die unter keinen Umständen mit dem Gemüse in Berührung kommen dürfen.

Das Substrat wird vorzugsweise in Säcken angeliefert und kann aus verschiedenen Mischungen bestehen, die sich für die unterschiedlichen Pflanzenarten, wie beispielsweise Kresse, Feldsalat oder Tomaten, eignen. Als besonders gut geeignet hat sich das Substrat erwiesen, das unter dem Handelsnamen "Belflor"® erhältlich ist.

Dem in Säcken angelieferten Substrat kann Komposterde beigegeben werden, die entweder vom eigenen Komposthaufen genommen werden oder von sonstigen Kompostanlagen bezogen werden kann. Infolge der heutigen starken Zunahme der Kompostierung ist Komposterde leicht und preisgünstig zu beziehen.

Zur Einstellung der Schichtdicke kann der bestand zwischen den beiden Walzen 4 und 31 variiert werden. Eine Möglichkeit dieser Einstellung besteht darin, dass die Lagerböcke der Wellen dieser Walzen 4,31 verschoben werden.

Für den Antrieb der Zahnräder 28 und 29 sind Ketten 36 und 37 vorgesehen. Die Arbeitsrichtung der Einrichtung 1 ist mittels eines Pfeiles 38 angedeutet.

Die Auftragung der Substratschicht 2 erfolgt beispielsweise auf eine Folie 33 aus Kunststoff, die vorzugsweise zusammen mit der Schicht 2 entfernt oder ersetzt wird.

Die beiden Riemenscheiben 39 und 40 sowie der Riemen 41 sind aus Platzgründen vorzugsweise auf der gegenüberliegenden Seite des Fahrzeuges bzw. der Einrichtung 1 angeordnet.

Aus Sicherheitsgründen ist es zweckmässig, die Transmissionen einzukapseln, damit sie sich nicht in die Kleider des Gärtners festhaken und ihn somit verletzen können.

## Patentansprüche

1. Einrichtung zur Herstellung einer Substratschicht für den Pflanzenanbau auf einer mindestens annähernd undurchlässigen Unterlage (33), mit einem auf Walzen fahrbaren Wagen, mit einer Bewegungsvorrichtung (4,5), einer Vorrichtung (7,12,14) zur Aufnahme des Substrats, einer Vorrichtung (24,26) zum Zusammenpressen des Substrats (10) zu einer Schicht (2) und zur Abgabe der Substratschicht (2) auf die Unterlage, dadurch gekennzeichnet, dass die Bewegungsvorrichtung (4,5) für zwei Fahrtrichtungen ausgelegt ist, und dass das Substrat (10) aus einem Sack (8), über eine Schrägfläche (12) in einen Abgaberaum (11) zuführbar und über ein Leitblech (14), eine Förderwalze (31) und eine mittlere Walze (4) auf die als Pflanzenfläche dienende Unterlage (33) auftragbar ist.

2. Einrichtung nach Anspruch 1, dadurch gekennzeichnet, dass sie eine Vorrichtung (9) zur Aufnahme und Abgabe von Saatgut einschliesst.

3. Einrichtung nach Anspruch 1 oder 2, dadurch gekennzeichnet, dass sie mit einem Getriebemotor (15,16) für den Antrieb aller Vorrichtungen ausgestattet ist.

4. Einrichtung nach einem der vorangehenden Ansprüche, dadurch gekennzeichnet, dass sie eine Vorrichtung (14,14a) zur Einstellung der Dicke der Substratschicht (2) aufweist.

5. Einrichtung nach Anspruch 3 oder 4, dadurch gekennzeichnet, dass sie eine Transmission (19,35-37) zur Übertragung der Antriebskraft vom Getriebemotor (15,16) auf die Bewegungsvorrichtung (4,5), die Zusammenpressvorrichtung (24,26) sowie die Sähvorrichtung (9,29) aufweist.

6. Einrichtung nach einem der vorangehenden Ansprüche, dadurch gekennzeichnet, dass sie an einem Ende mit einer fahrbaren Hebevorrichtung für das Manövrieren versehen ist.

7. Einrichtung nach einem der vorangehenden Ansprüchen, dadurch gekennzeichnet, dass sie vom Netz oder einer Batterie elektrisch antreibbar ist.

8. Einrichtung nach Anspruch 1, dadurch gekennzeichnet, dass sie für den Antrieb mittels eines Verbrennungsmotors ausgelegt ist.

9. Einrichtung nach Anspruch 1, dadurch gekennzeichnet, dass sie lenkbar ausgebildet ist.

## Claims

1. Apparatus for producing a substrate layer for plant culture on an at least approximative impervious support (33), with a wagon movable on rollers, with a moving device (4,5), a device (7,12,14) for receiving the substrate, a device (24, 26) for pressing the substrate (10) together onto the layer (2) and for delivering said layer (2) to the support, **characterized in,** that the moving device (4,5) is designed for two moving directions, and that the substrate (10) is supplied from a bag (8) via an inclined plane into a delivery space (11) and via a deflecting plate (14), a conveyor roller (31) and an intermediate roller (4) onto the support (33) serving as plant area.

2. Apparatus according to claim 1, **characterized in,** that it comprises a device (9) for receiving and delivering seed-corn.

3. Apparatus according to claim 1 or 2, **characterized in,** that it is equipped with a geared engine (15,16) for driving all devices.

4. Apparatus according to one of the preceding claims, **characterized in,** that it comprises an adjusting device (14,14a) for the thickness of the substrate layer.

5. Apparatus according to claim 3 and 4, **characterized in,** that it comprises a transmission (19,35-37) for transferring the driving force from the geared engine (15,16) onto the moving device (4,5), the pressing device (24,26) and the seeding device (9,29).

6. Apparatus according to one of the preceding claims, **characterized in,** that it at one end is provided with a movable lifting and maneuvering device.

7. Apparatus according to one of the preceding claims, **characterized in,** that it is connectable to the power supply net or a battery for electric operation.

8. Apparatus according to one of the preceding claims, **characterized in,** that it is designed to be operated by means of a combustion engine.

9. Apparatus according to claim 1, **characterized in,** that it is designed for a steering operation.

## Revendications

1. Appareillage pour l'élaboration d'une couche de substrat pour la culture de plantes sur un support (33) au moins presque imperméable, avec un véhicule déplaçable sur des rouleaux, avec un mécanisme de mise en mouvement (4,5), un dispositif (7,12,14) pour la réception du substrat, un dispositif (21,26) pour l'agglomération du substrat (10) en une couche (2) et pour la distribution de la couche de substrat (2) sur le support, caractérisé en ce que le mécanisme de mouvement (4,5) est équipe, pour deux sens de marche et que le substrat (10) peint être apporté à partir d'un sac (8), par l'intermédiaire d'une surface inclinée (12) dans un espace de distribution (11) et peut être appliqué sur le support (33) servant de surface pour plantations par l'intermédiaire d'une tôle de guidage (14), d'un cylindre d'alimentation (31) et d'un rouleau médian (4).

2. Appareillage selon la revendication 1, caractérisé en ce qu'il comporte un dispositif (9) pour la réception et la distribution de semences.

3. Appareillage selon l'une des revendications 1 ou 2, caractérisé en ce qu'il est muni d'un motoréducteur (15,16) pour l'entraînement de tous les dispositifs.

4. Appareillage selon l'une quelconque des revendications précédentes, caractérisé en ce qu'il présente un dispositif (14,14a) pour l'ajustement de l'épaisseur de la couche de substrat (2).

5. Appareillage selon l'une quelconque des revendications 3 ou 4, caractérisé en ce qu'il présente une transmission (19,35,37) pour le transfert de la force motrice du motoréducteur (15,16) au dispositif de mise en mouvement (4,5), du dispositif d'agglomération (24,26), ainsi qu'au dispositif de semis (9,29).

6. Appareillage selon l'une quelconque des revendications précédentes, caractérisé en ce qu'il est muni à une extrémité d'un dispositif de levage mobile pour la manoeuvre.

7. Appareillage selon l'une quelconque des revendications précédentes, caractérisé en ce qu'il peut être entraîné électriquement par le courant du réseau ou par une batterie.

8. Appareillage selon la revendication 1, caractérisé en ce qu'il est équipé pour l'entraînement du moyen d'un moteur à combustion interne.

9. Appareillage selon la revendication 1, caractérisé en ce qu'il est orientable.
